# EUROPÄISCHE PATENTSCHRIFT

(11) **EP 3 675 076 B1**
(45) Veröffentlichungstag und Bekanntmachung des Hinweises auf die Patenterteilung: **18.01.2023**
(21) Anmeldenummer: 19215293.2
(22) Anmeldetag: 11.12.2019
(51) Int. Cl.: G08B 21/20, G01N 29/00

(54) **GEFAHRENMELDER UND VERFAHREN ZU DESSEN BETRIEB**
HAZARD DETECTOR AND METHOD FOR OPERATING THE SAME
AVERTISSEUR DE DANGER ET SON PROCÉDÉ DE FONCTIONNEMENT

(30) Priorität: 13.12.2018 DE 102018132051
(43) Veröffentlichungstag der Anmeldung: 01.07.2020
(73) Patentinhaber: QUNDIS GmbH, 99098 Erfurt (DE)
(72) Erfinder: DÖBEL, Christian, 99880 Waltershausen (DE)
(74) Vertreter: Liedtke & Partner Patentanwälte

(56) Entgegenhaltungen:
- DE-A1- 19 846 241
- DE-A1-102009 056 268
- DE-B3-102016 211 840
- DE-C2- 19 846 241

## Beschreibung

Die Erfindung betrifft eine Anordnung mit einem Gefahrenmelder und einem Raum, in welchem der Gefahrenmelder angeordnet ist, nach den Merkmalen des Oberbegriffs des Anspruchs 1 und ein Verfahren zum Betrieb des Gefahrenmelders.

Aus dem Stand der Technik sind, wie in der DE 10 2009 056 268 A1 beschrieben, ein Gefahrenmelder und ein Verfahren zur Erkennung von Gegenständen im Nahbereich des Gefahrenmelders bekannt. Der Gefahrenmelder umfasst eine Einrichtung zur Erkennung von Gegenständen im Nahbereich des Gefahrenmelders mit genau einem Ultraschallsensor, welcher dazu eingerichtet ist, einen Elevationswinkelbereich von mindestens 180° und einen Azimutwinkelbereich von 360° zu erfassen. DE 198 46 241 C2 offenbart ein Verfahren zur Feuchtebestimmung an Mauerwerksmaterialien mit Ultraschallanalyse im Vergleich mit Werten für zuvor aus einer repräsentativen Menge von Stichproben gleichen Materials.

Der Erfindung liegt die Aufgabe zu Grunde, eine gegenüber dem Stand der Technik verbesserte Anordnung mit einem Gefahrenmelder und einem Raum, in welchem der Gefahrenmelder angeordnet ist, und ein gegenüber dem Stand der Technik verbessertes Verfahren zum Betrieb des Gefahrenmelders anzugeben.

Die Aufgabe wird erfindungsgemäß gelöst durch eine Anordnung mit einem Gefahrenmelder und einem Raum, in welchem der Gefahrenmelder angeordnet ist, mit den Merkmalen des Anspruchs 1 und ein Verfahren zum Betrieb des Gefahrenmelders mit den Merkmalen des Anspruchs 8.

Vorteilhafte Ausgestaltungen der Erfindung sind Gegenstand der Unteransprüche.

Bei einer Anordnung mit einem Gefahrenmelder und einem Raum, in welchem der Gefahrenmelder angeordnet ist, umfasst der Gefahrenmelder eine Ultraschallsensoreinrichtung zur Umfeldüberwachung einer Umgebung des Gefahrenmelders. Der Gefahrenmelder ist insbesondere als ein Rauchwarnmelder oder Brandwarnmelder, Flammenmelder, Brandgasmelder, Wärmemelder oder Feuchtemelder ausgebildet. Die Ultraschallsensoreinrichtung ist vorteilhafterweise zur Umfeldüberwachung einer Umgebung des Gefahrenmelders vorgesehen, d. h. ausgebildet und eingerichtet. Diese Ultraschallsensoreinrichtung ist bei herkömmlichen als Rauchwarnmelder oder Brandwarnmelder, Flammenmelder, Brandgasmelder, Wärmemelder oder Feuchtemelder ausgebildeten Gefahrenmeldern dazu vorgesehen, zu überwachen, dass sich keine Gegenstände in der Umgebung des Gefahrenmelders befinden, welche dessen Funktion beeinträchtigen könnten, beispielsweise Öffnungen, durch welche hindurch auftretender Rauch in den Gefahrenmelder eindringt und somit von diesem detektiert wird, blockieren könnten.

Erfindungsgemäß ist die Ultraschallsensoreinrichtung derart ausgebildet und eingerichtet, dass sie ein Ultraschallsignal aussendet, welches derart ausgebildet ist, dass zumindest Signalbestandteile des gesendeten Ultraschallsignals in mindestens eine Wand des Raums, in welchem der Gefahrenmelder angeordnet ist, eindringen und an mindestens einer durch Feuchtigkeit verursachten Grenzschicht reflektiert werden, wenn diese mindestens eine durch Feuchtigkeit verursachte Grenzschicht in der Wand vorhanden ist, wobei eine Auswerteeinheit zur Auswertung des von der Ultraschallsensoreinrichtung empfangenen reflektierten Ultraschallsignals, insbesondere zur Auswertung einer Antwortzeit und einer Amplitude des von der Ultraschallsensoreinrichtung empfangenen reflektierten Ultraschallsignals, vorgesehen ist, um zu ermitteln, ob die Wand einen feuchten Bereich aufweist.

Die Ultraschallsensoreinrichtung, welche vorteilhafterweise auch zur Umfeldüberwachung ausgebildet ist, überwacht dabei vorteilhafterweise auch, dass keine Gegenstände in der Umgebung des Gefahrenmelders diese Funktion behindern, d. h. insbesondere dass keine Gegenstände in der Umgebung des Gefahrenmelders verhindern, dass das gesendete Ultraschallsignal bis zur mindestens einen zu untersuchenden und zu überwachenden Wand vordringt.

In einem erfindungsgemäßen Verfahren zum Betrieb dieses Gefahrenmelders, insbesondere zur Überwachung der mindestens einen Wand des Raums hinsichtlich Feuchtigkeit, wird von der Ultraschallsensoreinrichtung ein Ultraschallsignal ausgesendet, welches derart ausgebildet ist, dass zumindest Signalbestandteile des gesendeten Ultraschallsignals in die mindestens eine Wand des Raums, in welchem der Gefahrenmelder angeordnet ist, eindringen und an mindestens einer durch Feuchtigkeit verursachten Grenzschicht reflektiert werden, wenn diese mindestens eine durch Feuchtigkeit verursachte Grenzschicht in der Wand vorhanden ist, wobei das von der Ultraschallsensoreinrichtung empfangene reflektierte Ultraschallsignal, insbesondere dessen Antwortzeit und Amplitude, ausgewertet wird, um zu ermitteln, ob die Wand einen feuchten Bereich aufweist.

Unter dem Begriff Wand sollen im Sinne dieser Anmeldung alle baulichen Begrenzungen des Raums in einem Gebäude verstanden werden, d. h. sowohl Seitenwände als auch ein Fußboden und eine Decke, wobei vorgesehen sein kann, dass mittels der erfindungsgemäßen Lösung die gesamte bauliche Begrenzung des Raums oder nur ein oder mehrere Bereiche, beispielsweise nur eine oder mehrere Seitenwände, nur der Fußboden, nur die Decke oder eine Kombination aus Fußboden, Decke und/oder einer oder mehreren Seitenwänden, hinsichtlich Feuchtigkeit überwacht wird.

Durch die erfindungsgemäße Lösung weist der Gefahrenmelder, insbesondere Rauchwarnmelder, eine integrierte Feuchteermittlung auf, mittels welcher, insbesondere permanent, die Feuchtigkeit von Wänden, beispielsweise in Wohnund/oder Industriegebäuden, ermittelt werden kann. Der Gefahrenmelder weist somit vorteilhafterweise eine zusätzliche Funktion auf, d. h. er ist dazu vorgesehen, d. h. dazu ausgebildet und eingerichtet, vor zwei Gefahren zu warnen, beispielsweise vor Rauch und/oder Feuer und zusätzlich vor feuchten Wänden.

Dabei wird vorteilhafterweise für die Feuchtermittlung die Ultraschallsensoreinrichtung genutzt, die vorteilhafterweise bereits im Gefahrenmelder für die Umfeldüberwachung vorgesehen ist.

Alternativ kann bei der erfindungsgemäßen Lösung vorgesehen sein, dass die Ultraschallsensoreinrichtung ausschließlich zur Feuchteermittlung vorgesehen ist, d. h. ausschließlich dazu ausgebildet und eingerichtet ist, die Wand auf die oben beschriebene Weise hinsichtlich eines feuchten Bereichs zu überwachen, und nicht zusätzlich auch die Umgebung des Gefahrenmelders bezüglich Gegenständen, welche die Funktion des Gefahrenmelders behindern könnten, zu überwachen.

Alternativ kann bei der erfindungsgemäßen Lösung vorgesehen sein, dass der Gefahrenmelder ausschließlich zur Feuchteermittlung vorgesehen ist, d. h. ausschließlich dazu ausgebildet und eingerichtet ist. D. h. der Gefahrenmelder ermittelt dann nur, ob die Wand einen feuchten Bereich aufweist, und warnt dann nur vor Feuchtegefahr. Die Ultraschallsensoreinrichtung kann dabei beispielsweise ausschließlich hierfür vorgesehen, d. h. ausgebildet und eingerichtet sein, oder zusätzlich auch zur Umfeldüberwachung bezüglich Gegenständen in der Umgebung des Gefahrenmelders, welche dessen Funktion behindern könnten, insbesondere verhindern könnten, dass das Ultraschallsignal bis zur zu überwachenden Wand vordringt.

Bisher ist kein Rauchwarnmelder mit einer integrierten Feuchtemessung und auch kein anderes Feuchtigkeitsmessgerät zur dauerhaften Integration in Innenräume bekannt, das permanent die Feuchtigkeit von Wänden in einem Wohn- oder Industriegebäude misst. Die meisten Technologien werden mobil eingesetzt und basieren auf der Widerstandsmessung, wobei eine solche Messung erst in einem Havariefall erfolgt, d. h. insbesondere erst, wenn die Feuchtigkeit bereits sichtbar ist.

Viele der bisher bekannten Technologien sind zerstörend, so dass mindestens Löcher in die Wände von Bauwerken gebohrt oder, bei der Messung tiefergehender Feuchtigkeit, Teile der Wand herausgebrochen werden müssen. Dabei wird möglicherweise die Struktur der Wand gestört, d. h. die Bausubstanz wird beschädigt, wodurch zumindest Schönheitsreparaturen erforderlich werden. Andere bisher bekannte Messverfahren sind zwar zerstörungsfrei, jedoch wird dann, im Gegensatz zur erfindungsgemäßen integrierten Lösung, stets ein Zusatzgerät benötigt.

Ein weiterer, gravierender Nachteil bisheriger Technologien ist es, dass die Feuchtigkeitsmessung nicht permanent, sondern nur sporadisch erfolgt. Der Grund dafür ist, dass die eingesetzten Werkzeuge weder permanent zur Verfügung stehen noch in die Wände oder in eine Gebäudetechnik integriert sind. Die Messung erfolgt dabei meist erst, wenn bereits ein Schaden eingetreten ist, möglicherweise auch viel zu spät, wenn der betreffende Raum mit der feuchten Wand nicht regelmäßig genutzt wird, beispielsweise bei Wirtschaftsräumen oder leer stehenden Wohnung. Des Weiteren sind mit den bisher bekannten Methoden und Vorrichtungen keine zeitlichen Veränderungen der Feuchtigkeit, beispielsweise langsame Gradienten, zum Beispiel über Wochen hinweg, messbar. Aus dieser wesentlichen Information würden sich bereits wichtige und frühzeitige Rückschlüsse auf die Durchfeuchtung der Wand ergeben.

Diese Nachteile werden mittels der erfindungsgemäßen Lösung vermieden, da die Wand, insbesondere mittels der erfindungsgemäß integrierten Lösung, zerstörungsfrei und dauerhaft auf einen feuchten Bereich überprüft wird und somit die Feuchtigkeit und deren Entwicklung frühzeitig festgestellt und überwacht wird. Dadurch sind insbesondere auch zeitliche Veränderungen der Feuchtigkeit ermittelbar, wodurch beispielsweise auch auf eine jeweils vorliegende Art einer Leckage geschlossen werden kann. Wenn beispielsweise die Wand nur langsam durchfeuchtet, handelt es sich um eine kleine Leckage und/oder um ein kleines Rohr, das undicht ist. Wenn die Wand in die Sättigung gelangt, ist es insbesondere auch möglich, eine die Wand durchflutende Feuchtemenge auszurechnen.

Ein weiterer Vorteil der erfindungsgemäßen Lösung besteht darin, dass ein großflächiger Messbereich auf Feuchtigkeit überwacht wird. Bei bisher bekannten Verfahren erfolgt eine punktuelle Messung. Bei der hier beschriebenen Lösung erfolgt hingegen die Feuchtigkeitsermittlung integral über eine größere Fläche. Dadurch können insbesondere Messfehler besser ausgeglichen werden.

Die erfindungsgemäße Lösung ermöglicht als wesentlichen Vorteil die permanente, mindestens qualitative, Überwachung von Wänden hinsichtlich ihrer Durchfeuchtung. Die Ultraschallwellen des Ultraschallsignals sind dafür geeignet, weil sie in die jeweilige Wand zum Teil eindringen können und zerstörungsfrei, analog einer Materialprüfung in Fertigungslinien, sich mit der Zeit bildende Grenzschichten in der Wand erfassen können. Damit ist eine Methode geschaffen, mit deren Hilfe sich permanent oder zyklisch die Bildung und Verschiebung von Grenzschichten in der Wand messen lassen.

Ein weiterer Vorteil ist, dass im Gefahrenmelder bereits eine Ultraschallsensoreinrichtung mit mindestens einem Ultraschallsender und mindestens einem Ultraschallempfängerempfänger, beispielsweise integriert als ein Transceiver, vorhanden ist. Damit ist nur eine relativ geringe konstruktive, d. h. insbesondere bauliche, Änderung erforderlich, um die Zusatzfunktion der Überwachung hinsichtlich Feuchtigkeit aufzunehmen. Auch sind insbesondere Softwareanpassungen erforderlich, welche im Wesentlichen die Generierung zusätzlicher Signalanteile für das Ultraschallsignal, die Auswertung des erfassten reflektierten Ultraschallsignal, um die Feuchtigkeit in der Wand zu ermitteln, und beispielsweise eine Implementierung eines Lernalgorithmus umfassen, welcher eine Selbstkalibrierung bezüglich veränderter Luftfeuchtigkeit im Raum ermöglicht.

Feuchtigkeitsprobleme in Wänden sind ein weit verbreitetes Problem. Bisher ist die Detektion nur möglich, wenn bereits Verfärbungen an den Wänden sichtbar sind. Dann sind die Schäden bereits enorm und größere Sanierungsmaßnahmen sind nötig. Die erfindungsgemäße Lösung ermöglicht im Gegensatz dazu bereits die Erkennung einer beginnenden Durchfeuchtung von Bauwerken, insbesondere von Raumwänden, so dass wirksame Maßnahmen ermöglicht werden, bevor der Schaden zu groß ist. Daraus ergibt sich der wesentliche Vorteil der vorausschauenden Schadensvorhersage.

Der Gefahrenmelder ist durch die erfindungsgemäße Lösung um eine wesentliche Funktion erweitert, die eine bautechnische Relevanz aufweist und einem Endanwender nützt, indem er frühzeitig gewarnt wird vor einer Durchfeuchtung und dadurch schnell nach den Ursachen suchen kann und beispielsweise auch Versicherungszahlungen einsparen kann.

Das Ultraschallsignal ist bei dem hier beschriebenen Gefahrenmelder, insbesondere im Vergleich zu dem Ultraschallsignal zur Umfeldüberwachung eines herkömmlichen Gefahrenmelders, insbesondere um weitere Komponenten, insbesondere Frequenzen und Signalamplituden, ergänzt, die zu einem bestimmten Teil in die Wand eindringen. Insbesondere ist das gesendete Ultraschallsignal hinsichtlich einer Frequenz oder einer Mehrzahl von Frequenzen und/oder hinsichtlich einer Amplitude oder einer Mehrzahl von Amplituden derart ausgebildet, dass zumindest Signalbestandteile des gesendeten Ultraschallsignals in die Wand des Raums, in welchem der Gefahrenmelder angeordnet ist, eindringen und an der mindestens einen durch Feuchtigkeit verursachte Grenzschicht reflektiert werden, wenn diese mindestens eine durch Feuchtigkeit verursachte Grenzschicht in der Wand vorhanden ist. Beispielsweise ist ein Ultraschallspektrum des Ultraschallsignals, welches gesendet wird, um zu ermitteln, ob die Wand einen feuchten Bereich aufweist, kurzwelliger als das Ultraschallspektrum des Ultraschallsignals zur Umfeldüberwachung, insbesondere kurzwelliger als das Ultraschallspektrum des Ultraschallsignals zur Umfeldüberwachung eines aus dem Stand der Technik bekannten herkömmlichen Gefahrenmelders. Dies ist vorteilhafterweise mittels eines herkömmlichen Ultraschall-Breitbandtransceivers realisierbar, welcher somit als Ultraschallsensoreinrichtung für die beschriebene Lösung verwendbar ist. Um sicherzustellen, dass die Wand, bei welcher ermittelt werden soll, ob sie einen feuchten Bereich aufweist, mittels des Ultraschallsignals erreicht wird, kann ein breitbandiges Ultraschallsignal verwendet werden.

Vorteilhafterweise wird mittels der Ultraschallsensoreinrichtung die Ermittlung, ob die Wand einen feuchten Bereich aufweist, als ein zusätzlicher Messschritt zur herkömmlichen Umfeldüberwachung durchgeführt, welche dazu vorgesehen ist, zu überwachen, dass sich keine Gegenstände in der Umgebung des Gefahrenmelders befinden, welche dessen Funktion beeinträchtigen könnten. In diesem Messschritt werden mittels des auf die oben beschriebene Weise veränderten Ultraschallsignals größere Entfernungen überbrückt, so dass mittels dieses veränderten Ultraschallsignals die Wand erreicht wird. Es kann somit mittels der Ultraschallsensoreinrichtung sowohl überwacht werden, dass sich keine Gegenstände in der Umgebung des Gefahrenmelders befinden, welche dessen Funktion beeinträchtigen könnten, beispielsweise Öffnungen, durch welche hindurch auftretender Rauch in den Gefahrenmelder eindringt und somit von diesem detektiert wird, blockieren könnten, als auch ermittelt werden, ob die Wand einen feuchten Bereich aufweist. Die Ultraschallsensoreinrichtung ist vorteilhafterweise für beides vorgesehen, d. h. ausgebildet und eingerichtet.

Im Verfahren wird daher vorteilhafterweise das Ultraschallsignal mit der vorgegebenen Frequenz oder Mehrzahl von Frequenzen und/oder mit der vorgegebenen Amplitude oder Mehrzahl von Amplituden ausgesendet, welche es ermöglichen, dass zumindest Signalbestandteile des gesendeten Ultraschallsignals in die Wand des Raums, in welchem der Gefahrenmelder angeordnet ist, eindringen und an der mindestens einen durch Feuchtigkeit verursachten Grenzschicht reflektiert werden, wenn diese mindestens eine durch Feuchtigkeit verursachte Grenzschicht in der Wand vorhanden ist.

Die Ultraschallsensoreinrichtung ist insbesondere zur Aussendung des Ultraschallsignals in mindestens eine vorgegebene Richtung und über eine vorgegebene Entfernung ausgebildet und eingerichtet, insbesondere in Richtung der zu überwachenden Wand, wobei die Entfernung beispielsweise mindestens der Entfernung von der Ultraschallsensoreinrichtung zur zu überwachenden Wand entspricht. Dadurch wird sichergestellt, dass das gesendete Ultraschallsignal die zu überwachende Wand auch erreicht.

Im Verfahren wird somit vorteilhafterweise das Ultraschallsignal in mindestens eine vorgegebene Richtung und über die vorgegebene Entfernung ausgesendet. Dadurch wird sichergestellt, dass die jeweilige Wand des Raums, welche hinsichtlich Feuchtigkeit überwacht werden soll, auch tatsächlich überwacht wird, da das Ultraschallsignal entsprechend ausgerichtet ist und über eine ausreichende Entfernung bis zur zu überwachenden Wand gesendet wird, und das, wenn Feuchtigkeit ermittelt wird, die Wand, in welcher die Feuchtigkeit ermittelt wurde, identifizierbar ist.

Vorteilhafterweise wird ein Signalanteil, insbesondere Signalpaket, des von der Ultraschallsensoreinrichtung empfangenen reflektierten Ultraschallsignals, welches von einer Grenzfläche zwischen einer Luft des Raums und der Wand reflektiert wird, als zeitliche Referenz verwendet, da sich dieser Signalanteil, insbesondere dieses Signalpaket, nicht ändern wird, solange sich die baulichen Gegebenheiten um den Gefahrenmelder nicht ändern. Informationen über die Feuchtigkeit der Wand selbst werden mit diesem Signalanteil, insbesondere von diesem Signalpaket, nicht transportiert.

Vorteilhafterweise ist ein zeitlicher Filter zur Vorbehandlung des von der Ultraschallsensoreinrichtung empfangenen reflektierten Ultraschallsignals vorgesehen. Im Verfahren wird vorteilhafterweise das von der Ultraschallsensoreinrichtung empfangene reflektierte Ultraschallsignal somit mittels des zeitlichen Filters vorbehandelt. Dadurch kann die rechenintensive Signalverarbeitung reduziert werden

Die Auswerteeinheit ist insbesondere dazu ausgebildet und eingerichtet, ein Referenzspektrum einer trockenen Wand, genauer gesagt eines von einer trockenen Wand reflektierten Ultraschallsignals, beispielsweise der überwachten Wand im trockenen Zustand oder einer Vergleichswand, mit einem Spektrum des von der Ultraschallsensoreinrichtung empfangenen reflektierten Ultraschallsignals zu vergleichen, um zu ermitteln, ob die Wand einen feuchten Bereich aufweist. Im Verfahren wird somit vorteilhafterweise das Referenzspektrum der trockenen Wand, d. h. beispielsweise der trockenen Vergleichswand oder der Wand im trockenen Zustand, genauer gesagt des von der trockenen Wand reflektierten Ultraschallsignals, mit dem Spektrum des von der Ultraschallsensoreinrichtung empfangenen reflektierten Ultraschallsignals verglichen, um zu ermitteln, ob die Wand einen feuchten Bereich aufweist. Dadurch kann auf einfache Weise festgestellt werden, ob die Wand trocken ist oder einen feuchten Bereich aufweist, indem überprüft wird, ob das Spektrum des von der Ultraschallsensoreinrichtung empfangenen reflektierten Ultraschallsignals mit dem Referenzspektrum der trockenen Wand, genauer gesagt mit dem Referenzspektrum des von der trockenen Wand reflektierten Ultraschallsignals, übereinstimmt oder nicht.

Vorteilhafterweise ist die Auswerteeinheit dazu ausgebildet und eingerichtet, das Referenzspektrum der trockenen Wand, genauer gesagt des von der trockenen Wand reflektierten Ultraschallsignals, zu ermitteln, insbesondere statistisch zu ermitteln, insbesondere mittels einer Mustererkennung. Im Verfahren wird somit vorteilhafterweise das Referenzspektrum der trockenen Wand, genauer gesagt des von der trockenen Wand reflektierten Ultraschallsignals, ermittelt, insbesondere statistisch ermittelt, insbesondere mittels einer Mustererkennung. Vorteilhafterweise wird ein Spektrum der Wand im trockenen Zustand als Referenzspektrum ermittelt, d. h. die Wand wird zunächst, beispielsweise bei Installation des Gefahrenmelders, als trocken angenommen und deren erfasstes Spektrum wird als Referenzspektrum verwendet. Dadurch kann beispielsweise auch bei einer Wand, deren innerer Aufbau unbekannt ist, wodurch keine Vergleichswand ermittelbar oder nachbaubar ist, ein Referenzspektrum ermittelt werden.

Der Gefahrenmelder umfasst vorteilhafterweise mindestens eine Warneinrichtung, beispielsweise eine akustische und/oder optische Warneinrichtung. Im Verfahren wird vorteilhafterweise eine Warnung, beispielsweise eine akustische und/oder optische Warnung, generiert und über die Warneinrichtung ausgegeben, wenn ermittelt wird, dass die Wand einen feuchten Bereich aufweist. Dadurch kann frühzeitig auf die feuchte Wand hingewiesen werden, so dass entsprechend frühzeitig Gegenmaßnahmen eingeleitet und dadurch größere Schäden verhindert werden können.

Alternativ oder zusätzlich kann vorgesehen sein, dass der Gefahrenmelder mindestens eine Einrichtung zur Weiterleitung der generierten Warnung aufweist. Im Verfahren wird dann die Warnung generiert und entsprechend weitergeleitet. Die Einrichtung zur Weiterleitung der Warnung ist insbesondere eine Kommunikationseinheit zur Kommunikation mit mindestens einer anderen Einheit, insbesondere einer entfernt vom Gefahrenmelder positionierten Einheit. Diese Kommunikationseinheit kann beispielsweise eine Funkkommunikationseinheit sein, um die Warnung entsprechend per Funk weiterzuleiten, beispielsweise mittels Mobilfunk, Bluetooth, W-Lan oder mittels einer anderen Funktechnologie. Die Kommunikationseinheit kann beispielsweise auch eine andere kabellose Kommunikationseinheit sein, zum Beispiel eine Infrarotschnittstelle, oder eine kabelgebundene Kommunikationseinheit. Die Einheit, an welche die Warnung weitergeleitet wird, ist mobiles Endgerät, insbesondere ein Mobiltelefon, beispielsweise ein Smartphone, oder ein Computer. Dies kann beispielsweise eine Einheit eines Hauseigentümers, Wohnungseigentümers, Mieters, Nutzers oder einer Hausverwaltung sein. Durch diese Weiterleitung der Warnung wird, auch für nicht aktiv genutzte Räume, für Räume, die nur selten betreten werden, und für nur schwer zugängliche Bereiche sichergestellt, dass die Warnung sehr schnell wahrgenommen wird, d. h. dass eine jeweils zuständige Person oder Einrichtung, beispielsweise der Hauseigentümer, Wohnungseigentümer, Mieter, Nutzer oder die Hausverwaltung, sehr schnell die Warnung erhält und somit über die aufgetretene Feuchtigkeit informiert wird, so dass entsprechend frühzeitig Gegenmaßnahmen eingeleitet und dadurch größere Schäden verhindert werden können.

Ausführungsbeispiele der Erfindung werden im Folgenden anhand von Zeichnungen näher erläutert.

Darin zeigen:
- Figur 1: schematisch einen Raum mit einem darin angeordneten Gefahrenmelder, wobei eine mittels des Gefahrenmelders hinsichtlich Feuchtigkeit überwachte Wand trocken ist, und
- Figur 2: schematisch einen Raum mit einem darin angeordneten Gefahrenmelder, wobei eine mittels des Gefahrenmelders hinsichtlich Feuchtigkeit überwachte Wand einen feuchten Bereich aufweist.

Einander entsprechende Teile sind in allen Figuren mit den gleichen Bezugszeichen versehen.

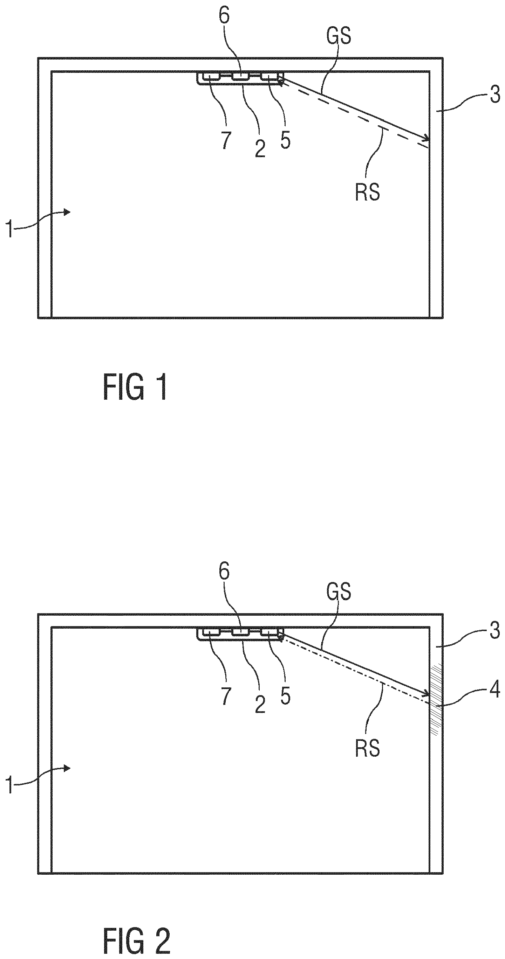

Die **Figuren 1 und 2** zeigen jeweils eine schematische Darstellung eines Raums 1 mit einem darin angeordneten Gefahrenmelder 2. Dieser Gefahrenmelder 2 weist vorteilhafterweise eine Grundfunktion auf, d. h. er ist beispielsweise als ein Rauchwarnmelder ausgebildet. Zusätzlich ist der Gefahrenmelder 2 zur Überwachung mindestens einer Wand 3 des Raums 1 hinsichtlich Feuchtigkeit fähig, d. h. insbesondere dazu ausgebildet und eingerichtet.

In den hier dargestellten Beispielen ist die überwachte Wand 3 eine Seitenwand des Raums 1, wobei der Gefahrenmelder 2 an einer Decke des Raums 1 angeordnet ist. In anderen Beispielen ist eine andere Anordnung des Gefahrenmelders 2 im Raum 1 und/oder eine andere Ausbildung des Raums 1 und/oder eine Überwachung einer oder mehrerer anderer oder weiterer Wände 3 des Raums 1 möglich, wobei unter dem Begriff Wand 3 nicht nur die Seitenwände des Raums 1 verstanden werden, sondern auch ein Fußboden des Raums 1 und dessen Decke.

**In** **Figur 1** ist die mittels des Gefahrenmelders 2 hinsichtlich Feuchtigkeit überwachte Wand 3 trocken. In **Figur 2** weist die mittels des Gefahrenmelders 2 hinsichtlich Feuchtigkeit überwachte Wand 3 einen feuchten Bereich 4 auf.

Der Gefahrenmelder 2, insbesondere Rauchwarnmelder, umfasst eine Ultraschallsensoreinrichtung 5, insbesondere zur Umfeldüberwachung einer Umgebung des Gefahrenmelders 2. Die Ultraschallsensoreinrichtung 5 ist dabei derart ausgebildet und eingerichtet, dass sie ein Ultraschallsignal GS aussendet, welches derart ausgebildet ist, dass zumindest Signalbestandteile des gesendeten Ultraschallsignals GS in die mindestens eine Wand 3 des Raums 1, in welchem der Gefahrenmelder 2 angeordnet ist, eindringen und an mindestens einer durch Feuchtigkeit verursachten Grenzschicht reflektiert werden, wenn diese mindestens eine durch Feuchtigkeit verursachte Grenzschicht in der Wand 3 vorhanden ist. Ein entsprechendes reflektiertes Ultraschallsignal RS wird von der Ultraschallsensoreinheit 5 empfangen.

Es ist eine Auswerteeinheit 6 zur Auswertung dieses von der Ultraschallsensoreinrichtung 5 empfangenen reflektierten Ultraschallsignals RS, insbesondere zur Auswertung einer Antwortzeit und einer Amplitude des von der Ultraschallsensoreinrichtung 5 empfangenen reflektierten Ultraschallsignals RS, vorgesehen, um zu ermitteln, ob die Wand 3 einen feuchten Bereich 4 aufweist.

In einem Verfahren zum Betrieb dieses Gefahrenmelders 2, insbesondere zur Überwachung der mindestens einen Wand 3 des Raums 1 hinsichtlich Feuchtigkeit, wird von der Ultraschallsensoreinrichtung 5 somit das Ultraschallsignal GS ausgesendet, welches derart ausgebildet ist, dass zumindest Signalbestandteile des gesendeten Ultraschallsignals GS in die Wand 3 des Raums 1, in welchem der Gefahrenmelder 2 angeordnet ist, eindringen und an mindestens einer durch Feuchtigkeit verursachten Grenzschicht reflektiert werden, wenn diese mindestens eine durch Feuchtigkeit verursachte Grenzschicht in der Wand 3 vorhanden ist, wobei das von der Ultraschallsensoreinrichtung 5 empfangene reflektierte Ultraschallsignal RS, insbesondere dessen Antwortzeit und Amplitude, ausgewertet wird, um zu ermitteln, ob die Wand 3 einen feuchten Bereich 4 aufweist.

Die beschriebene Lösung zielt somit vorteilhafterweise darauf ab, die bereits integrierte Ultraschallsensoreinrichtung 5 zur Umfeldüberwachung des insbesondere als Rauchwarnmelder ausgebildeten Gefahrenmelders 2 derart zu erweitern, dass sie die Feuchtigkeit von Wänden 3, d. h. beispielsweise von Seitenwänden, Decken, insbesondere Zimmerdecken, und/oder Fußböden, insbesondere ortsaufgelöst, misst. Dazu wird das Ultraschallsignal GS, das zur Erfassung des Umfelds des als Rauchwarnmelder ausgebildeten Gefahrenmelders 2 genutzt wird, um weitere Komponenten, insbesondere Frequenzen und/oder Signalamplituden, ergänzt, die zu einem gewissen Teil in die Wand 3 eindringen.

Von einer, insbesondere ersten, Grenzschicht Luft/Wand wird aufgrund einer Änderung eines akustischen Widerstands ein Teil des gesendeten Ultraschallsignals GS reflektiert und zum Gefahrenmelder 2 zurückgesendet. Dieser Teil des empfangenen reflektierten Ultraschallsignals RS kann als zeitliche Referenz genutzt werden, da er sich nicht ändern wird, solange sich bauliche Gegebenheiten um den Gefahrenmelder 2 nicht ändern. Informationen über die Feuchtigkeit der Wand 3 selbst werden mit diesem Teil des reflektierten Ultraschallsignals RS nicht transportiert.

Ein weiterer Teil des gesendeten Ultraschallsignals GS wird von der Wand 3 absorbiert und an einer nächsten, insbesondere zweiten, Grenzschicht in der Wand 3, beispielsweise bei einem Übergang einer trockenen Steinschicht in eine feuchte Steinschicht eines Mauerwerks der Wand 3, zurückgeworfen und vom Gefahrenmelder 2, insbesondere von dessen Ultraschallsensoreinrichtung 5, empfangen. Diese, insbesondere zweite, Grenzschicht wird somit durch Feuchtigkeit in der Wand 3, d. h. durch den feuchten Bereich 4, verursacht.

Diese, insbesondere zweite, Grenzschicht muss somit nicht zwingend existieren, insbesondere nicht bei trockenen Wänden 3. So existiert diese, insbesondere zweite, Grenzschicht in Figur 1 nicht, da die Wand 3 trocken ist. In Figur 2 existiert diese, insbesondere zweite, Grenzschicht, da die Wand 3 hier den feuchten Bereich 4 aufweist. Deshalb ist das reflektierte Ultraschallsignal RS der Träger der Feuchtigkeitsinformationen der Wand 3, insbesondere des Mauerwerks.

Im Folgenden wird die Vorgehensweise nochmals detailliert beschrieben.

Der Gefahrenmelder 2, insbesondere dessen Ultraschallsensoreinrichtung 5, sendet in vorgegebene Richtungen, zum Beispiel zur Decke oder, wie im hier gezeigten Beispiel, an mindestens eine daran angrenzende Wand 3, das Ultraschallsignal GS aus, vorteilhafterweise in Form eines Ultraschallimpulses, vorteilhafterweise mit einer vorgegebenen Frequenz. Das Trägermedium dieses gesendeten Ultraschallsignals GS und auch des reflektierten Ultraschallsignals RS ist die Luft in dem Raum 1. Zweckmäßigerweise wird das Ultraschallsignal GS über eine vorgegebene Entfernung, insbesondere über eine vorgegebene Mindestentfernung, ausgesendet, welche beispielsweise mindestens der Entfernung von der Ultraschallsensoreinrichtung 5 zur mindestens einen zu überwachenden Wand 3 entspricht, um sicherzustellen, dass das gesendete Ultraschallsignal GS diese Wand 3 auch erreicht.

Danach wird das reflektierte Ultraschallsignal RS, d. h. insbesondere der zurückgeworfene Schallimpuls, mit der entsprechenden Frequenz oder deren gefalteten Frequenzen von der Ultraschallsensoreinrichtung 5 wieder empfangen und mittels der Auswerteeinheit 6 ausgewertet. Im Rahmen dieser Auswertung kann das von der Ultraschallsensoreinrichtung 5 empfangene reflektierte Ultraschallsignal RS zeitlich in verschiedene Signalanteile, insbesondere Signalpakete, zerlegt werden.

Zunächst wird von der Ultraschallsensoreinrichtung 5 ein konstantes erstes Signalpaket empfangen, das eine Oberfläche der Wand 3 und somit die Grenzschicht zum Trägermedium, d. h. die Grenzschicht zwischen Luft und Wand 3, beschreibt. Dieses erste Signalpaket sollte immer gleich empfangen werden, da von einem baulich konstanten Zustand ausgegangen wird.

Ein zweites Signalpaket spiegelt das Innenleben der Wand 3 wider, d. h. es gibt Auskunft über einen inneren Zustand der Wand 3. Hier bilden sich unterschiedliche Grenzschichten beispielsweise zwischen Tapete, trockenem Mauerwerk und, wenn vorhanden, feuchtem Mauerwerk aus. Eine dieser inneren Grenzschichten wird bei einer Durchfeuchtung der Wand 3 infolge einer damit verbundenen Änderung des akustischen Widerstands eine veränderte Schallreflexion verursachen. Durch die Auswertung von Antwortzeit und Amplitude des reflektierten und von der Ultraschallsensoreinrichtung 5 empfangenen Ultraschallsignals RS kann damit auf eine Durchfeuchtung der Wand 3 geschlossen werden.

Ein Algorithmus zur Auswertung des ankommenden, d. h. des von der Ultraschallsensoreinrichtung 5 empfangenen reflektierten Ultraschallsignals RS ist vorteilhafterweise lernfähig ausgebildet, damit die Feuchtigkeit des Trägermediums, d. h. insbesondere die Luftfeuchtigkeit im Raum 1, keinen Einfluss auf die Messung hat. Die Auswerteeinheit 6, insbesondere deren Algorithmus, ist somit selbst kalibrierend ausgebildet.

Vorteilhafterweise ist ein zeitlicher Filter vorgesehen, welcher ein Spektrum des von der Ultraschallsensoreinheit 5 empfangenen reflektierten Ultraschallsignals RS zunächst vorbehandelt, damit eine rechenintensive Signalbehandlung, beispielsweise in Form einer Fourieranalyse, minimiert werden kann.

Ziel des Algorithmus selbst ist, ein Referenzspektrum einer trockenen Wand 3, genauer gesagt eines von einer trockenen Wand 3 reflektierten Ultraschallsignals RS, etwa mit Hilfe einer Mustererkennung, statistisch zu ermitteln, um eine feuchte Wand 3, d. h. eine Wand 3, welche einen feuchten Bereich4 aufweist, wie in Figur 2 gezeigt, damit klar abgrenzen zu können. Das Referenzspektrum der trockenen Wand 3, genauer gesagt des reflektierten Ultraschallsignals RS der trockenen Wand 3, wird somit vorteilhafterweise mit dem Spektrum des von der Ultraschallsensoreinrichtung 5 empfangenen reflektierten Ultraschallsignals RS verglichen, um zu ermitteln, ob die Wand 3 einen feuchten Bereich 4 aufweist.

Weitere Signalpakete sollten aufgrund des großen akustischen Widerstands der Wand 3 und der damit verbundenen enormen Dämpfung dieser nicht mehr zurückgeworfen werden. Sollten sie dennoch auftreten, können sie vorteilhafterweise ignoriert werden.

Der Gefahrenmelder 2 umfasst vorteilhafterweise mindestens eine Warneinrichtung 7, beispielsweise eine akustische und/oder optische Warneinrichtung 7. Wird ermittelt, dass die Wand 3 einen feuchten Bereich 4 aufweist, wie in Figur 2 gezeigt, dann wird vorteilhafterweise eine, beispielsweise akustische und/oder optische, Warnung generiert und über die Warneinrichtung 7 ausgegeben. Dadurch kann frühzeitig auf die feuchte Wand 3, d. h. auf den feuchten Bereich 4 der Wand 3, hingewiesen werden, so dass entsprechend frühzeitig Gegenmaßnahmen eingeleitet und dadurch größere Schäden verhindert werden können.

### BEZUGSZEICHENLISTE

- 1: Raum
- 2: Gefahrenmelder
- 3: Wand
- 4: feuchter Bereich
- 5: Ultraschallsensoreinrichtung
- 6: Auswerteeinheit
- 7: Warneinrichtung

- GS: gesendetes Ultraschallsignal
- RS: reflektiertes Ultraschallsignal

## Patentansprüche

1. Anordnung mit
- einem Gefahrenmelder (2), insbesondere Rauchwarnmelder, umfassend eine Ultraschallsensoreinrichtung (5), insbesondere zur Umfeldüberwachung einer Umgebung des Gefahrenmelders (2), und
- einem Raum (1), in welchem der Gefahrenmelder (2) angeordnet ist, **dadurch gekennzeichnet, dass** die Ultraschallsensoreinrichtung (5) derart ausgebildet und eingerichtet ist, dass sie ein Ultraschallsignal (GS) aussendet, welches derart ausgebildet ist, dass zumindest Signalbestandteile des Ultraschallsignals (GS) in mindestens eine Wand (3) des Raums (1), in welchem der Gefahrenmelder (2) angeordnet ist, eindringen und an mindestens einer durch Feuchtigkeit verursachten Grenzschicht reflektiert werden, wenn diese mindestens eine durch Feuchtigkeit verursachte Grenzschicht in der Wand (3) vorhanden ist,
wobei eine Auswerteeinheit (6) zur Auswertung des von der Ultraschallsensoreinrichtung (5) empfangenen reflektierten Ultraschallsignals (RS), insbesondere zur Auswertung einer Antwortzeit und einer Amplitude des von der Ultraschallsensoreinrichtung (5) empfangenen reflektierten Ultraschallsignals (RS), vorgesehen ist, wobei das reflektierte Ultraschallsignal (RS) der Träger von Feuchtigkeitsinformationen der Wand (3) ist und die Auswerteeinheit (6) das reflektierte Ultraschallsignal auswertet, um zu ermitteln, ob die Wand (3) einen feuchten Bereich (4) aufweist.

2. Anordnung nach Anspruch 1,
**dadurch gekennzeichnet, dass** das gesendete Ultraschallsignal (GS) hinsichtlich
- einer Frequenz oder einer Mehrzahl von Frequenzen und/oder
- hinsichtlich einer Amplitude oder einer Mehrzahl von Amplituden derart ausgebildet ist, dass zumindest Signalbestandteile des gesendeten Ultraschallsignals (GS) in die Wand (3) des Raums (1), in welchem der Gefahrenmelder (2) angeordnet ist, eindringen und an der mindestens einen durch Feuchtigkeit verursachten Grenzschicht reflektiert werden, wenn diese mindestens eine Grenzschicht in der Wand (3) vorhanden ist.

3. Anordnung nach einem der vorhergehenden Ansprüche,
**dadurch gekennzeichnet, dass** die Ultraschallsensoreinrichtung (5) zur Aussendung des Ultraschallsignals (GS) in mindestens eine vorgegebene Richtung und über eine vorgegebene Entfernung ausgebildet und eingerichtet ist.

4. Anordnung nach einem der vorhergehenden Ansprüche,
**dadurch gekennzeichnet, dass** ein zeitlicher Filter zur Vorbehandlung des von der Ultraschallsensoreinrichtung (5) empfangenen reflektierten Ultraschallsignals (RS) vorgesehen ist.

5. Anordnung nach einem der vorhergehenden Ansprüche,
**dadurch gekennzeichnet, dass** die Auswerteeinheit (6) dazu ausgebildet und eingerichtet ist, ein Referenzspektrum einer trockenen Wand (3) mit einem Spektrum des von der Ultraschallsensoreinrichtung (5) empfangenen reflektierten Ultraschallsignals (RS) zu vergleichen, um zu ermitteln, ob die Wand (3) einen feuchten Bereich (4) aufweist.

6. Anordnung nach Anspruch 5,
**dadurch gekennzeichnet, dass** die Auswerteeinheit (6) dazu ausgebildet und eingerichtet ist, das Referenzspektrum der trockenen Wand (3) zu ermitteln, insbesondere statistisch zu ermitteln, insbesondere mittels einer Mustererkennung.

7. Anordnung nach einem der vorhergehenden Ansprüche,
**dadurch gekennzeichnet, dass** der Gefahrenmelders (2) mindestens eine Warneinrichtung (7) umfasst.

8. Verfahren zum Betrieb eines Gefahrenmelders (2) einer Anordnung nach einem der vorhergehenden Ansprüche, wobei von der Ultraschallsensoreinrichtung (5) ein Ultraschallsignal (GS) ausgesendet wird, welches derart ausgebildet ist, dass zumindest Signalbestandteile des gesendeten Ultraschallsignals (GS) in mindestens eine Wand (3) des Raums (1), in welchem der Gefahrenmelder (2) angeordnet ist, eindringen und an mindestens einer durch Feuchtigkeit verursachten Grenzschicht reflektiert werden, wenn diese mindestens eine durch Feuchtigkeit verursachte Grenzschicht in der Wand (3) vorhanden ist, wobei das von der Ultraschallsensoreinrichtung (5) empfangene reflektierte Ultraschallsignal (RS) der Träger von Feuchtigkeitsinformationen der Wand (3) ist und, insbesondere dessen Antwortzeit und Amplitude, ausgewertet wird, um zu ermitteln, ob die Wand (3) einen feuchten Bereich (4) aufweist.

9. Verfahren nach Anspruch 8,
**dadurch gekennzeichnet, dass** das Ultraschallsignal (GS) mit einer vorgegebenen Frequenz oder Mehrzahl von Frequenzen
und/oder
- mit einer vorgegebenen Amplitude oder Mehrzahl von Amplituden ausgesendet wird, welche es ermöglichen, dass zumindest Signalbestandteile des gesendeten Ultraschallsignals (GS) in die Wand (3) des Raums (1), in welchem der Gefahrenmelder (2) angeordnet ist, eindringen und an der mindestens einen durch Feuchtigkeit verursachten Grenzschicht reflektiert werden, wenn diese mindestens eine durch Feuchtigkeit verursachte Grenzschicht in der Wand (3) vorhanden ist.

10. Verfahren nach Anspruch 8 oder 9,
**dadurch gekennzeichnet, dass** das Ultraschallsignal (GS) in mindestens eine vorgegebene Richtung und über eine vorgegebene Entfernung ausgesendet wird.

11. Verfahren nach einem der Ansprüche 8 bis 10,
**dadurch gekennzeichnet, dass** ein Signalanteil des von der Ultraschallsensoreinrichtung (5) empfangenen reflektierten Ultraschallsignals (RS), welches von einer Grenzfläche zwischen einer Luft des Raums (1) und der Wand (3) reflektiert wird, als zeitliche Referenz verwendet wird.

12. Verfahren nach einem der Ansprüche 8 bis 11,
**dadurch gekennzeichnet, dass** das von der Ultraschallsensoreinrichtung (5) empfangene reflektierte Ultraschallsignal (RS) mittels des zeitlichen Filters vorbehandelt wird.

13. Verfahren nach einem der Ansprüche 8 bis 12,
**dadurch gekennzeichnet, dass** das Referenzspektrum der trockenen Wand (3) mit dem Spektrum des von der Ultraschallsensoreinrichtung (5) empfangenen reflektierten Ultraschallsignals (RS) verglichen wird, um zu ermitteln, ob die Wand (3) einen feuchten Bereich (4) aufweist.

14. Verfahren nach Anspruch 13,
**dadurch gekennzeichnet, dass** das Referenzspektrum der trockenen Wand (3) ermittelt wird, insbesondere statistisch ermittelt wird, insbesondere mittels einer Mustererkennung.

15. Verfahren nach einem der Ansprüche 8 bis 14,
**dadurch gekennzeichnet, dass** eine Warnung generiert und über die Warneinrichtung (7) ausgegeben wird, wenn ermittelt wird, dass die Wand (3) einen feuchten Bereich (4) aufweist.

## Claims

1. Arrangement having
- a hazard alarm (2), in particular a smoke alarm, comprising an ultrasonic sensor device (5), in particular for monitoring an environment of the hazard alarm (2), and
- a room (1) in which the hazard alarm (2) is arranged,
**characterized in that** the ultrasonic sensor device (5) is designed and configured to emit an ultrasonic signal (GS) which is designed such that at least signal components of the ultrasonic signal (GS) enter at least one wall (3) of the room (1), in which the hazard alarm (2) is arranged, and are reflected at at least one boundary layer caused by moisture if this at least one boundary layer caused by moisture is present in the wall (3),
wherein an evaluation unit (6) for evaluating the reflected ultrasonic signal (RS) received by the ultrasonic sensor device (5), in particular for evaluating a response time and an amplitude of the reflected ultrasonic signal (RS) received by the ultrasonic sensor device (5), is provided, wherein the reflected ultrasonic signal (RS) is the carrier of moisture information relating to the wall (3), and the evaluation unit (6) evaluates the reflected ultrasonic signal in order to determine whether the wall (3) has a moist region (4).

2. Arrangement according to Claim 1,
**characterized in that** the transmitted ultrasonic signal (GS) is designed in terms of
- a frequency or a plurality of frequencies and/or
- an amplitude or a plurality of amplitudes
in such a manner that at least signal components of the transmitted ultrasonic signal (GS) enter the wall (3) of the room (1), in which the hazard alarm (2) is arranged, and are reflected at the at least one boundary layer caused by moisture if this at least one boundary layer is present in the wall (3).

3. Arrangement according to one of the preceding claims,
**characterized in that** the ultrasonic sensor device (5) is designed and configured to emit the ultrasonic signal (GS) in at least one predefined direction and over a predefined distance.

4. Arrangement according to one of the preceding claims,
**characterized in that** a temporal filter for pretreating the reflected ultrasonic signal (RS) received by the ultrasonic sensor device (5) is provided.

5. Arrangement according to one of the preceding claims,
**characterized in that** the evaluation unit (6) is designed and configured to compare a reference spectrum of a dry wall (3) with a spectrum of the reflected ultrasonic signal (RS) received by the ultrasonic sensor device (5) in order to determine whether the wall (3) has a moist region (4).

6. Arrangement according to Claim 5,
**characterized in that** the evaluation unit (6) is designed and configured to determine, in particular statistically determine, the reference spectrum of the dry wall (3), in particular by means of pattern recognition.

7. Arrangement according to one of the preceding claims,
**characterized in that** the hazard alarm (2) comprises at least one warning device (7).

8. Method for operating a hazard alarm (2) of an arrangement according to one of the preceding claims, wherein the ultrasonic sensor device (5) emits an ultrasonic signal (GS) which is designed such that at least signal components of the transmitted ultrasonic signal (GS) enter at least one wall (3) of the room (1), in which the hazard alarm (2) is arranged, and are reflected at at least one boundary layer caused by moisture if this at least one boundary layer caused by moisture is present in the wall (3), wherein the reflected ultrasonic signal (RS) received by the ultrasonic sensor device (5) is the carrier of moisture information relating to the wall (3) and its response time and amplitude, in particular, are evaluated in order to determine whether the wall (3) has a moist region (4).

9. Method according to Claim 8,
**characterized in that** the ultrasonic signal (GS) is emitted at a predefined frequency or a plurality of frequencies and/or
- with a predefined amplitude or a plurality of amplitudes which make it possible for at least signal components of the transmitted ultrasonic signal (GS) to enter the wall (3) of the room (1), in which the hazard alarm (2) is arranged, and to be reflected at the at least one boundary layer caused by moisture if this at least one boundary layer caused by moisture is present in the wall (3).

10. Method according to Claim 8 or 9,
**characterized in that** the ultrasonic signal (GS) is emitted in at least one predefined direction and over a predefined distance.

11. Method according to one of Claims 8 to 10,
**characterized in that** a signal component of the reflected ultrasonic signal (RS) received by the ultrasonic sensor device (5), which is reflected by a boundary surface between air of the room (1) and the wall (3), is used as a temporal reference.

12. Method according to one of Claims 8 to 11,
**characterized in that** the reflected ultrasonic signal (RS) received by the ultrasonic sensor device (5) is pretreated by means of the temporal filter.

13. Method according to one of Claims 8 to 12,
**characterized in that** the reference spectrum of the dry wall (3) is compared with the spectrum of the reflected ultrasonic signal (RS) received by the ultrasonic sensor device (5) in order to determine whether the wall (3) has a moist region (4).

14. Method according to Claim 13,
**characterized in that** the reference spectrum of the dry wall (3) is determined, in particular statistically determined, in particular by means of pattern recognition.

15. Method according to one of Claims 8 to 14,
**characterized in that** a warning is generated and is output via the warning device (7) if it is determined that the wall (3) has a moist region (4).

## Revendications

1. Agencement, comprenant
- un avertisseur de danger (2), en particulier un détecteur de fumée, comprenant un dispositif capteur à ultrasons (5), en particulier pour la surveillance d'entourage d'un environnement de l'avertisseur de danger (2), et
- une pièce (1) dans laquelle est disposé l'avertisseur de danger (2),
**caractérisé en ce que** le dispositif capteur à ultrasons (5) est réalisé et conçu de telle sorte qu'il émet un signal ultrasonore (GS) qui est réalisé de telle sorte qu'au moins des composantes de signal du signal ultrasonore (GS) pénètrent dans au moins un mur (3) de la pièce (1) dans laquelle est disposé l'avertisseur de danger (2) et sont réfléchies sur au moins une couche limite causée par l'humidité si ladite au moins une couche limite causée par l'humidité existe dans le mur (3),
dans lequel une unité d'évaluation (6) est prévue pour évaluer le signal ultrasonore réfléchi (RS) reçu du dispositif capteur à ultrasons (5), en particulier pour évaluer un temps de réponse et une amplitude du signal ultrasonore réfléchi (RS) reçu du dispositif capteur à ultrasons (5), dans lequel le signal ultrasonore (RS) réfléchi est porteur d'informations d'humidité du mur (3), et l'unité d'évaluation (6) évalue le signal ultrasonore réfléchi pour déterminer si le mur (3) présente une zone humide (4).

2. Agencement selon la revendication 1, **caractérisé en ce que** le signal ultrasonore envoyé (GS) est réalisé concernant
- une fréquence ou une pluralité de fréquences, et/ou
- concernant une amplitude ou une pluralité d'amplitudes de telle sorte qu'au moins des composantes de signal du signal ultrasonore envoyé (GS) pénètrent dans le mur (3) de la pièce (1) dans laquelle est disposé l'avertisseur de danger (2) et sont réfléchies sur ladite au moins une couche limite causée par l'humidité si ladite au moins une couche limite existe dans le mur (3).

3. Agencement selon l'une quelconque des revendications précédentes, **caractérisé en ce que** le dispositif capteur à ultrasons (5) est réalisé et conçu pour émettre le signal ultrasonore (GS) dans au moins une direction prédéfinie et sur une distance prédéfinie.

4. Agencement selon l'une quelconque des revendications précédentes, **caractérisé en ce qu'**un filtre temporel est prévu pour le prétraitement du signal ultrasonore réfléchi (RS) reçu du dispositif capteur à ultrasons (5).

5. Agencement selon l'une quelconque des revendications précédentes, **caractérisé en ce que** l'unité d'évaluation (6) est réalisée et conçue pour comparer un spectre de référence d'un mur sec (3) avec un spectre du signal ultrasonore réfléchi (RS) reçu du dispositif capteur à ultrasons (5) afin de déterminer si le mur (3) présente une zone humide (4).

6. Agencement selon la revendication 5, **caractérisé en ce que** l'unité d'évaluation (6) est réalisée et conçue pour déterminer le spectre de référence du mur sec (3), en particulier pour le déterminer de manière statistique, en particulier au moyen d'une reconnaissance de formes.

7. Agencement selon l'une quelconque des revendications précédentes, **caractérisé en ce que** l'avertisseur de danger (2) comprend au moins un dispositif d'alarme (7).

8. Procédé permettant de faire fonctionner un avertisseur de danger (2) d'un agencement selon l'une quelconque des revendications précédentes, dans lequel le dispositif capteur à ultrasons (5) émet un signal ultrasonore (GS) qui est réalisé de telle sorte qu'au moins des composantes de signal du signal ultrasonore envoyé (GS) pénètrent dans au moins un mur (3) de la pièce (1) dans laquelle est disposé l'avertisseur de danger (2) et sont réfléchies sur au moins une couche limite causée par l'humidité si ladite au moins une couche limite causée par l'humidité existe dans le mur (3), dans lequel le signal ultrasonore réfléchi (RS) reçu du dispositif capteur à ultrasons (5) est porteur d'informations d'humidité du mur (3) et est évalué, en particulier le temps de réponse et l'amplitude du signal ultrasonore réfléchi (RS) reçu du dispositif capteur à ultrasons (5) étant évalués, pour déterminer si le mur (3) présente une zone humide (4).

9. Procédé selon la revendication 8, **caractérisé en ce que** le signal ultrasonore (GS) est émis avec une fréquence prédéfinie ou une pluralité de fréquences, et/ou
- avec une amplitude prédéfinie ou une pluralité d'amplitudes qui permettent qu'au moins des composantes de signal du signal ultrasonore envoyé (GS) pénètrent dans le mur (3) de la pièce (1) dans laquelle est disposé l'avertisseur de danger (2) et sont réfléchies sur au moins une couche limite causée par l'humidité si ladite au moins une couche limite causée par l'humidité existe dans le mur (3).

10. Procédé selon la revendication 8 ou 9, **caractérisé en ce que** le signal ultrasonore (GS) est émis dans au moins une direction prédéfinie et sur une distance prédéfinie.

11. Procédé selon l'une quelconque des revendications 8 à 10, **caractérisé en ce qu'**une partie de signal du signal ultrasonore réfléchi (RS) reçu du dispositif capteur à ultrasons (5) qui est réfléchi par une couche limite entre l'air de la pièce (1) et le mur (3) est utilisée comme référence temporelle.

12. Procédé selon l'une quelconque des revendications 8 à 11, **caractérisé en ce que** le signal ultrasonore réfléchi (RS) reçu du dispositif capteur à ultrasons (5) est prétraité au moyen du filtre temporel.

13. Procédé selon l'une quelconque des revendications 8 à 12, **caractérisé en ce que** le spectre de référence du mur sec (3) est comparé avec le spectre du signal ultrasonore réfléchi (RS) reçu du dispositif capteur à ultrasons (5) afin de déterminer si le mur (3) présente une zone humide (4).

14. Procédé selon la revendication 13, **caractérisé en ce que** le spectre de référence du mur sec (3) est déterminé, en particulier déterminé statistiquement, en particulier au moyen d'une reconnaissance de formes.

15. Procédé selon l'une quelconque des revendications 8 à 14, **caractérisé en ce qu'**une alarme est générée et émise par l'intermédiaire du dispositif d'avertissement (7) s'il est déterminé que le mur (3) présente une zone humide (4).
